# EUROPEAN PATENT APPLICATION

(11) **EP 4 108 362 A1**
(43) Date of publication of application: **28.12.2022**
(21) Application number: 21180932.2
(22) Date of filing: 22.06.2021
(51) Int. Cl.: B22F 10/14, B28B 1/00, B29C 64/165, B33Y 10/00, C08F 265/04, C08L 51/00

(54) **MATERIAL SYSTEM FOR 3D PRINTING**

(71) Applicant: Evonik Operations GmbH, 45128 Essen (DE)
(72) Inventor: The designation of the inventor has not yet been filed
(74) Representative: Evonik Patent Association

(57) **Abstract**

The present disclosure provides a material system for three-dimensional printing, which includes (a) a liquid binder comprising a material polymerizable by free radical polymerization and (b) a powder composition comprising a first type of polymer particles and a second type of polymer particles, which are different from each other and each comprise an initiator for a free radical polymerization reaction, wherein the first type of polymer particles are swellable or dissolvable in the liquid binder at room temperature and thereby release contained initiator for a first free radical polymerization of the polymerizable material, and wherein the second type of polymer particles release additional initiator upon contact with the liquid binder at elevated temperatures above 40°C for a further radical polymerization of the polymerizable material. Such material system enables to prepare articles by 3D printing which have good green body strength and form stability upon curing at elevated temperatures. The final cured three-dimensional articles have mechanical properties, which render them suitable for end use applications.

## Description

### TECHNICAL FIELD

The present disclosure relates to a material system for three-dimensional (3D) printing and printed three-dimensional articles obtainable therefrom.

### TECHNICAL BACKGROUND

According to the ISO/ASTM 52921/2017 standard, there are different categories of 3D printing processes in additive manufacturing. This involves material extrusion, vat photopolymerization, material jetting, sheet lamination, direct energy deposition, powder bed fusion and binder jetting. The binder jetting process is also referred to in the literature as "3D printing", "powder 3D printing" or "powder binder jetting".

In the binder jetting process, a powder bed is applied layer by layer and a liquid binder is selectively applied to individual areas of each layer, for example, using a commercially available inkjet printing head. Typically, a computer aided design (CAD) file is used to define which area of the powder layer is to be printed with the binder. The application of the binder alternates with application of new powder layers. The selective application of the binder results in solidification of these areas. Thereby, a three-dimensional object is formed in the powder bed layer by layer by applying the binder locally to the specified areas of the new powder layers. Once the printing process is completed, the 3D object can be removed from the powder bed and optionally subjected to a post-processing procedure.

Various materials can be used as binder and as powder beds in binder jetting. Materials used in powder beds are typically sand, metal, ceramic or polymer particles. Binders typically consist of solvents, solubilized oligomers or polymers, chemically curable monomers, crosslinkers, monomer functionalized oligomers or polymers, catalysts, accelerators, and additives to adjust the rheology of the binders, e.g., surface tension or viscosity.

The composition of the binder determines the particle binding concept. Binders, which consist only of solvents, fuse the powder particles by means of cold welding. The solvent solubilizes and/or swells the particle surface and, in case of polymer particles, mobilizes the polymer chains on the particle surface. The entanglement of the polymer chains results in fusing of the powder particles, e.g., at the contact points between the particles. After evaporation of the solvent, a highly porous object is obtained. Solubilized oligomers or polymers can also be used as binders for cold welding. The oligomers or polymers do not evaporate, but rather contribute to enhance the connection between the particles.

Apart from cold welding, reactive binding systems are also known. The binders used for these systems are typically chemically curable monomers, crosslinkers, monomer-functionalized oligomers or polymers, catalysts or accelerators. After application, the binder is cured in the powder bed. Depending on the amount used, the binder fills up (part of) the pore volume in the bulk powder. As a result, a dimensionally stable object is formed. In case of reactive curing binder system, a component essential for curing, e.g., a catalyst, an initiator, or an accelerator, is typically added to the powder bed rather than the binder to prevent premature curing in the printhead. Curing takes place when the binder is applied to the powder bed and the component essential for curing is dissolved by the applied binder. Alternatively, the component required for curing can be applied via a second print head or a multi-channel print head in a separate formulation.

Typically, the printing process is followed by a post-processing step. The post-processing step can be, e.g., an oven heating step in which the 3D object is cured for a certain time at a certain temperature. The post-processing is typically used to remove solvent from the final object. In case of metal and ceramic powders, binder components are often completely removed thermally in addition to the solvent, and the remaining powder particles are compacted via sintering to produce a dense object. In case of polymer powders, chemical reactions are often initiated in the post-processing in addition to the removal of solvents.

Binder jetting has great advantages over other 3D printing processes such as powder bed fusion or directed energy deposition, which are based on melting the material from which the product is formed. Binder jetting has the best suitability among all known methods for directly realizing colored objects without subsequent coloring. Binder jetting is further suitable for producing particularly large articles. In addition, other 3D printing processes are very time-consuming in terms of the entire printing process up to the finished object.

A disadvantage of binder jetting is the method-related porosity of the finished object. Tensile strengths of only 2 to 5 MPa and elongations at break of 1% are thus achieved for objects printed by binder jetting, which are bonded by cold welding and/or chemical reaction. As a result, the binder jetting process has so far been used mainly for the production of decorative pieces or for casting molds. The porosity results in particular from the fact that in binder jetting processes only part of the cavities between the particles is filled by the binder. This is an inevitable consequence of the low viscosity of the liquid binder applied in the printing process. Increased binder application leads to migration into the adjacent powder areas, which leads to an increase in object dimensions and can result in a loss of shape accuracy, edge sharpness and possibly surface quality of the finished article.

Binder jetting also often fails to form 3D objects with sufficient green body strength to allow the green body objects to be unpacked from the powder bed and moved to post-processing steps. Without sufficient green body strength, only a limited selection of object geometries can be produced by binder jetting. Alternatively, the objects in the powder bed must be subjected to oven curing. This is disadvantageous because the thermal stress reduces the recyclability of the powder, e.g., due to the thermally induced reaction of the reactive components in the powder bed. In addition, the uniform temperature control of large powder beds with thermally poorly conducting polymer particles is technically very complex. Depending on the size of the powder bed, very long heating and cooling times are necessary, which makes such a process economically unattractive.

DE 10 2007 025 656 A1 discloses a self-curing material system for 3D printing. The material system comprises a particulate material based on poly(methyl methacrylate) that includes an initiator and as a separate component a binder that includes a polymerizable monomer selected from acrylates, methacrylates and/or styrene, a crosslinker and a catalyst. By application of the binder, the particulate material is locally hardened involving a radical polymerization reaction to form a three-dimensional article in a layer-by-layer process.

DE 10 2017 009 742 A1 describes a material system for the preparation of parts via 3D printing comprising a mixture of a water-insoluble particulate material selected from sands or insoluble polymers e.g. of the bakelite type and a water-soluble particulate material selected from a water-soluble polymer like polyvinylpyrrolidone, polyethylene glycol, polyvinyl alcohol, polyacrylic acid or saccharides and a water-based printing liquid, which is selectively applied to locally harden the particulate material by dissolving the water-soluble particulate material binding adjacent insoluble particles together. Parts formed using this material are useful as molds e.g. for cold molding or lamination processes, wherein simple demolding is achievable by disintegrating the mold with water. The parts formed using this material system are though generally porous and exhibit merely a relatively low mechanical strength, requiring further post-processing for example with a sealant to close pores before they can be used as molds.

WO 2017/178270 A1 describes the use of a specific powder mixture as powder component in a binder jetting process for forming parts with lower porosity and better mechanical properties. The mixture comprises suspension polymer particles (e.g. based on acrylate, methacrylate and/or styrene) having a median diameter of 10 to 500 µm and coagulated emulsion polymerizate particles (e.g. based on acrylate, methacrylate and/or styrene) having a median diameter of 0.5 to 80 µm. The coagulated emulsion polymerizate particles are reported to fill at least part of the voids in between the suspension polymer particles, increasing tap density, thereby reducing porosity and enhancing mechanical properties of the formed part

WO 2017/182364 A1 relates to suspension polymerizate particles that contain a crosslinked hard phase having a Tg greater than 70°C and a non-crosslinked soft phase having a Tg of less than 40°C for use as powder component in a binder jetting process. The soft phase dissolves fast leading to a rapid increase of viscosity, which avoids undesirable flooding of lower layers in the powder bed.

WO 2018/059912 A1 relates to the use of porous polymer particles having 5 to 20 vol.% pores as powder material in a binder jetting process. The use of such porous particles is described to facilitate the take-up of binder by the particles, thereby yielding a better binding between particles and lower porosity and better mechanical stability of the final articles produced.

WO 2019/121718 A1 describes a process, wherein a part that has been formed by binder jetting using a meltable polymer powder and a printable binder such as a polymerizable binder is subjected to a subsequent tempering treatment at a temperature above 25°C in a liquid or powder bed. It is reported that the tempering facilitates homogeneous material properties and enhances the mechanical properties of the part.

DE 10 2006 038 858 A1 describes a self-curing material system for layer-by-layer forming of three-dimensional objects. The material system includes a particulate material based on an acrylic polymer and a separately applicable binder for local hardening of a layer of the particulate material. The hardening process is delayed by suitable selection of the chemical composition of the material system and/or of ambient physical conditions such that hardening acts on the object no sooner than after application of 20 layers in order to achieve uniform shrinkage and avoid warpage or deformation. Different retarding means are described including addition of a retarder such as benzoquinone, use of a slow evaporating solvent such as pentanol in the binder and/or to decrease the temperature in the building process. High degrees of monomer conversion are however thus not achieved and the parts exhibit only limited mechanical strength, also due to their relatively high porosity due to the evaporation of the solvent.

Accordingly, it is an objective of the present invention to alleviate or avoid the disadvantages of the prior art. The present invention aims to attain a high degree of monomer conversion and, in particular, to provide 3D printed articles with sufficient green body strength that can be achieved at ambient conditions. Sufficient green body strength allows removal from the powder bed and handling without deformation or damage. It is further an objective to provide green bodies exhibiting enhanced form stability upon curing at elevated temperatures facilitating curing at elevated temperatures outside of the powder bed and without the need of a support structure. Another object of the present invention is to provide final cured 3D printed articles having enhanced mechanical properties, such as higher tensile strength and/or elongation at break. It is particularly desirable to provide final cured 3D printed articles with mechanical properties that make them suitable for end use applications.

### SUMMARY OF INVENTION

It has now surprisingly been found that the above objective can be achieved by a material system as specified in appended independent claim 1. The present invention accordingly relates to a material system for three-dimensional printing comprising (a) a liquid binder comprising a material polymerizable by free radical polymerization, and (b) a powder composition comprising a first type of polymer particles and a second type of polymer particles, which are different from each other and each comprise an initiator for a free radical polymerization reaction, wherein the first type of polymer particles are swellable or dissolvable in the liquid binder at room temperature and thereby release contained initiator for a first free radical polymerization of the polymerizable material, and wherein the second type of polymer particles release additional initiator upon contact with the liquid binder at elevated temperatures above 40°C for a further radical polymerization of the polymerizable material. Specific or preferred variants of the of the present invention are set forth in the dependent claims.

Furthermore, the present invention is further directed towards the use of the material system according to the present invention described above and, in more detail below for three-dimensional printing. It also concerns three-dimensional articles prepared by three-dimensional printing using the material system according to the present invention described above and, in more detail below.

The material system of the present invention provides various advantages. Thus, the material system according to the present invention exhibits good processability and can be used with established 3D printing equipment without problems. It enables to prepare articles by 3D printing which may attain at ambient conditions sufficient green body strength to allow taking out of the powder bed and handling without deformation or damage, indicative of relatively high degrees of monomer conversion. The green bodies obtainable from the material system according to the present invention moreover exhibit significantly enhanced form stability upon curing at elevated temperatures. This facilitates curing of the printed parts, including those with free-standing portions, at elevated temperatures to achieve their final properties outside of the powder bed, e.g. in an oven, without thermally-induced deformations, without the need of a support structure. The not solidified powder in the powder bed is accordingly not subject to thermal ageing or degradation promoting its recyclability. The final cured three-dimensional printed articles obtainable from the material system of the present invention are comparatively dense and exhibit significantly enhanced mechanical properties, such as a substantially higher tensile strength and/or elongation at break, compared to rather porous parts obtainable from conventional commercially available material systems for three-dimensional printing, without notable anisotropies of the mechanical properties related to the printing process. The final cured three-dimensional articles obtainable from the material system of the present invention may attain mechanical properties, which render them suitable for end use applications. The material system of the present invention may be formulated based on REACH-compliant components, avoiding harmful, e.g. carcinogenic substances. Owing to the attainable high degrees of monomer conversion the content of residual monomers in the final printed parts and related emissions of volatile organic components from the final part can be low

These and other optional features and advantages of the present invention are described in more detail in the following description.

### DETAILED DESCRIPTION

As used herein, the term "comprising" is understood to be open-ended and to not exclude the presence of additional undescribed or unrecited elements, materials, ingredients or method steps. The terms "including", "containing" and similar terms are understood to be synonymous with "comprising". As used herein, the term "consisting of" is understood to exclude the presence of any unspecified element, ingredient or method step. Use of open-ended language such as "comprising", "including" or "containing" accordingly encompasses, inter alia, the "consisting of" case, but is not limited thereto and allows for the presence of additional undescribed or unrecited elements, materials, ingredients or method steps. For example, a material system, composition or component stated to "comprise" or "include" a certain recited element or ingredient can consist of the recited element or ingredient (or in other words be the recited component) or further contain one or more unrecited element(s) or ingredient(s).

As used herein, the singular form of "a", "an", and "the" include plural referents unless the context clearly dictates otherwise.

Unless indicated to the contrary, the numerical parameters and ranges set forth in the following specification and appended claims are approximations. Notwithstanding that the numerical ranges and parameters setting forth the broad scope of the invention are approximations, the numerical values set forth in the specific examples are reported as precisely as possible. Any numerical values, however, contain errors necessarily resulting from the standard deviation in their respective measurement.

Also, it should be understood that any numerical range recited herein is intended to include all subranges subsumed therein. For example, a range of "1 to 10" is intended to include any and all sub-ranges between and including the recited minimum value of 1 and the recited maximum value of 10, that is, all subranges beginning with a minimum value equal to or greater than 1 and ending with a maximum value equal to or less than 10, and all subranges in between, e.g. 1 to 6.3, or 5.5 to 10, or 2.7 to 6.1.

As used herein, the term "polymer" means homopolymers (e.g., prepared from a single monomer species), copolymers (e.g., prepared from at least two monomer species), and graft polymers.

As used herein, the term "(meth)acrylate" and similar terms, such as "(meth)acrylic acid ester" means methacrylates and/or acrylates. Moreover, the term "(meth)acrylic acid" as used herein means methacrylic acid and/or acrylic acid.

As mentioned above, the present invention relates to a material system for three-dimensional printing comprising (a) a liquid binder and (b) a powder composition. The powder composition and the liquid binder of the material system are typically provided as separate components. The liquid binder may be printed onto a layer of the powder composition to locally solidify the powder layer allowing to build layer by layer a three-dimensional article as will be described further below in more detail. Solidification may involve filling of the void space between the powder particles by the liquid binder, local dissolution or swelling of powder particles by contact with the binder, physical binding, for example by entanglement of polymer chains, and chemical reactions, particularly a polymerization of the polymerizable material of the binder.

The term "liquid binder" as used herein refers to a composition in the form of a solution or dispersion, i.e., a homogeneous or heterogeneous liquid phase that is free-flowing and can be applied by a printhead of a 3D printer. The liquid binder according to the present invention comprises a material polymerizable by free radical polymerization.

The material polymerizable by free radical polymerization according to the present invention may comprise one or more than one type of mono-ethylenically unsaturated monomers. Non-limiting examples of mono-ethylenically unsaturated monomers include (meth)acrylate monomers, vinyl carbonate monomers, O-vinyl carbamate monomers, N-vinyl carbamate monomers, and (meth)acrylamide monomers. Preferably, the at least one type of mono-ethylenically unsaturated monomers may be selected from (meth)acrylate monomers.

Suitable (meth)acrylate monomers may be selected from, but are not limited to, alkyl (meth)acrylate such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, nonyl (meth)acrylate, decyl (meth)acrylate, and dodecyl (meth)acrylate; and hydroxyalkyl (meth)acrylate, such as hydroxyethyl (meth)acrylate, hydroxypropyl (meth)acrylate, and hydroxybutyl (meth)acrylate.

The material polymerizable by free radical polymerization according to the present invention may comprise one or more than one alkyl (meth)acrylate, preferably selected from methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, nonyl (meth)acrylate, decyl (meth)acrylate, dodecyl (meth)acrylate, and combinations thereof. The material polymerizable by free radical polymerization may comprise the one or more than one alkyl (meth)acrylate in an amount of 1 wt.% or more, such as 2 wt.% or more, or 2.5 wt.% or more, or 3 wt.% or more, based on the total weight of the liquid binder. The material polymerizable by free radical polymerization may comprise the one or more than one alkyl (meth)acrylate in an amount of 20 wt.% or less, such as 15 wt.% or less, or 10 wt.% or less, or 7 wt.% or less, based on the total weight of the liquid binder. The material polymerizable by free radical polymerization can for example comprise the one or more than one alkyl (meth)acrylate in an amount in a range between any of the above-mentioned values, such as from 1 wt.% to 20 wt.%, or from 2 wt.% to 10 wt.%, or from 3 wt.% to 7 wt.%, based on the total weight of the liquid binder.

The material polymerizable by free radical polymerization according to the present invention may comprise one or more than one hydroxyalkyl (meth)acrylate, preferably selected from hydroxyethyl (meth)acrylate, hydroxypropyl (meth)acrylate, hydroxybutyl (meth)acrylate, and combinations thereof, more preferably hydroxyethyl (meth)acrylate, hydroxypropyl (meth)acrylate, and combinations thereof. The material polymerizable by free radical polymerization may comprise the one or more than one hydroxyalkyl (meth)acrylate in an amount of 50 wt.% or more, such as 55 wt.% or more, or 60 wt.% or more, or 65 wt.% or more, based on the total weight of the liquid binder. The material polymerizable by free radical polymerization may comprise the one or more than one hydroxyalkyl (meth)acrylate in an amount of 99 wt.% or less, such as 95 wt.% or less, or 93 wt.% or less, or 90 wt.% or less, based on the total weight of the liquid binder. The material polymerizable by free radical polymerization can for example comprise the one or more than one hydroxyalkyl (meth)acrylate in an amount in a range between any of the above-mentioned values, such as from 50 wt.% to 99 wt.%, or from 55 wt.% to 95 wt.%, or from 60 wt.% to 90 wt.%, based on the total weight of the liquid binder.

The material polymerizable by free radical polymerization may optionally further comprise one or more than one crosslinker. As used herein, the term "crosslinker" refers to a monomer, oligomer or polymer that has functional groups capable of forming covalent bonds (crosslinks), either with itself or with functional groups of other crosslinkable compounds. The crosslinker may comprise a compound with two or more ethylenically unsaturated moieties, such as (meth)acrylate and/or allyl moieties, per molecule. Suitable compounds with two or more ethylenically unsaturated moieties may be selected from, but not limited to, divinyl benzene, trivinyl benzene, divinyl ethers, such as 1,4-butanediol divinyl ether, di(ethylene glycol)divinyl ether, tri(ethylene glycol) divinyl ether, 1,4-cyclohexanedimethanol divinyl ether; glyoxal bis(diallyl acetal); bi- or higher functional (meth)acrylates and combinations thereof. Suitable bi-functional (meth)acrylates may include ethylene glycol di(meth)acrylate, hexanediol di(meth)acrylate, tripropylene glycol di(meth)acrylate, butanediol di(meth)acrylate, triethylene glycol di(meth)acrylate, and dipropylene glycol di(meth)acrylate, preferably ethylene glycol di(meth)acrylate. Suitable higher functional (meth)acrylates may include trimethylolpropane tri(meth)acrylate, pentaerythritol tetraacrylate, di(trimethylolpropane)tetraacrylate, and dipentaerythritol penta-/hexa-acrylate.

The material polymerizable by free radical polymerization according to the present invention may comprise one or more than one bi- or higher functional (meth)acrylates, preferably bi-functional (meth)acrylates. The bi-functional (meth)acrylates may be selected from ethylene glycol di(meth)acrylate, hexanediol di(meth)acrylate, tripropylene glycol di(meth)acrylate, butanediol di(meth)acrylate, triethylene glycol di(meth)acrylate, dipropylene glycol di(meth)acrylate, and combinations thereof, preferably ethylene glycol di(meth)acrylate. The material polymerizable by free radical polymerization may comprise the one or more than one bi- or higher functional (meth)acrylates, preferably bi-functional (meth)acrylates, in an amount of 0.5 wt.% or more, such as 1 wt.% or more, or 1.5 wt.% or more, or 2 wt.% or more, based on the total weight of the liquid binder. The material polymerizable by free radical polymerization may comprise the one or more than one bi- or higher functional (meth)acrylates, preferably bi-functional (meth)acrylates, in an amount of 6 wt.% or less, such as 5 wt.% or less, or 4.5 wt.% or less, or 4 wt.% or less, based on the total weight of the liquid binder. The material polymerizable by free radical polymerization can for example comprise the one or more than one bi- or higher functional (meth)acrylates, preferably bi-functional (meth)acrylates, in an amount in a range between any of the above-mentioned values, such as from 0.5 wt.% to 5 wt.%, or from 1 wt.% to 5 wt.%, or from 1.5 wt.% to 4 wt.%, based on the total weight of the liquid binder.

In a preferred practice, the material polymerizable by free radical polymerization comprises one or more than one hydroxyalkyl(meth)acrylate monomer and one or more than one bi- or higher functional (meth)acrylate. The material polymerizable by free radical polymerization may comprise one or more than one hydroxyalkyl (meth)acrylate monomer in an amount of from 50 wt.% to 99 wt.%, and one or more than one bi- or higher functional (meth)acrylate in an amount of from 1 wt.% to 5 wt.%, the weight percentages being based on the total weight of the liquid binder.

According to the present invention, the material polymerizable by free radical polymerization may comprise one or more than one (meth)acrylate monomer(s) that individually yield(s) a homopolymer having a glass transition temperature below 0°C, such as below - 40°C. The material polymerizable by free radical polymerization may comprise one or more than one (meth)acrylate monomer(s) that individually yield(s) a homopolymer having a glass transition temperature of - 120°C or more, such as - 100°C or more or - 80°C or more. The material polymerizable by free radical polymerization according to the present invention may comprise one or more than one (meth)acrylate monomer(s) that individually yield(s) a homopolymer having a glass transition temperature in a range of from 0 to - 100°C, such as from - 40 to - 80°C. The glass transition temperatures of the homopolymers of the (meth)acrylate monomer(s) of the binder may be determined by dynamic mechanical analysis (DMA). Accordingly, the glass transition temperature may be measured on a dynamic mechanical analyzer of type DMA 1 manufactured by Mettler Toledo LLC (USA) with a peak force of 10 N and a minimal force of 0.001 N. The glass transition temperature is measured in a temperature range of from - 100°C to 100°C with a gradient of 5 K/min. The specimen is deflected at a frequency of 1 Hz and an amplitude of 50 µm.

Suitable (meth)acrylate monomer(s) that individually yield(s) a homopolymer having a glass transition temperature below 0°C, such as below - 40°C may be selected from, but is not limited to, ethyl acrylate, n-propyl acrylate, iso-propyl acrylate, n-butyl acrylate, iso-butyl acrylate, sec-butyl acrylate, 2-ethylhexyl acrylate, hexyl acrylate, nonyl acrylate, dodecyl acrylate, hydroxybutyl acrylate, hexyl methacrylate, octyl methacrylate, decyl methacrylate, isodecyl methacrylate, and dodecyl methacrylate, preferably hydroxybutyl acrylate.

The material polymerizable by free radical polymerization may comprise the one or more than one (meth)acrylate monomer(s) that individually yield(s) a homopolymer having a glass transition temperature below 0°C, such as below - 40°C, in an amount of 50 wt.% or more, such as 53 wt.% or more, or 55 wt.% or more, or 58 wt.% or more, based on the total weight of the liquid binder. The material polymerizable by free radical polymerization may comprise the one or more than one (meth)acrylate monomer(s) that individually yield(s) a homopolymer having a glass transition temperature below 0°C, such as below - 40°C, in an amount of 90 wt.% or less, such as 88 wt.% or less, or 85 wt.% or less, or 80 wt.% or less, based on the total weight of the liquid binder. The material polymerizable by free radical polymerization can for example comprise the one or more than one (meth)acrylate monomer(s) that individually yield(s) a homopolymer having a glass transition temperature below 0°C, such as below - 40°C, in an amount in a range between any of the above-mentioned values, such as from 50 wt.% to 90 wt.%, or from 50 wt.% to 88 wt.%, or from 55 wt.% to 80 wt.%, based on the total weight of the liquid binder.

The material polymerizable by free radical polymerization may comprise one or more than one volatile ethylenically unsaturated monomer(s) having a vapor pressure in a range of from 5 to 500 hPa, such as from 10 to 100 hPa or from 10 to 30 hPa, at a temperature of 20 °C. The vapor pressure may be determined according to OECD experimental guideline TG 104, particularly by static method. The one or more than one volatile ethylenically unsaturated monomer may be selected from the group consisting of methyl acrylate, methyl methacrylate, ethyl acrylate, ethyl methacrylate, propyl acrylate, propyl methacrylate, n-butyl acrylate, i-butyl acrylate, styrene, ethyl vinyl ether, divinyl ether, n-propyl vinyl ether, n-butyl vinyl ether, i-butyl vinyl ether and combinations thereof. The material polymerizable by free radical polymerization may comprise the one or more than one volatile ethylenically unsaturated monomer in an amount of 1 wt.% or more, such as 2 wt.% or more, or 2.5 wt.% or more, or 3 wt.% or more, based on the total weight of the liquid binder. The liquid binder may comprise the one or more than one volatile ethylenically unsaturated monomer in an amount of 20 wt.% or less, such as 15 wt.% or less, or 10 wt.% or less, or 7 wt.% or less, based on the total weight of the liquid binder. The liquid binder can for example comprise the one or more than one volatile ethylenically unsaturated monomer having a vapor pressure in a range of from 5 to 500 hPa in an amount in a range between any of the above-mentioned values, such as from 1 wt.% to 20 wt.%, or from 2 wt.% to 10 wt.%, or from 3 wt.% to 7 wt.%, based on the total weight of the liquid binder.

According to the present invention, the material polymerizable by free radical polymerization can be a mixture of ethylenically unsaturated monomers that is copolymerizable to a copolymer having a glass transition temperature of 30°C or less, such as 0°C or less or -20°C or less. The material polymerizable by free radical polymerization can be a mixture of ethylenically unsaturated monomers that is copolymerizable to a copolymer having a glass transition temperature of - 120°C or more, such as - 100°C or more or - 80°C or more. The material polymerizable by free radical polymerization according to the present invention can be a mixture of ethylenically unsaturated monomers that is copolymerizable to a copolymer having a glass transition temperature in a range of from 30 to - 120°C, such as from 0 to- 100°C, or from - 20 to - 80°C. The glass transition temperature may be determined by dynamic mechanical analysis (DMA) as described above.

Radical polymerization in the material system of the present invention may be inhibited by oxygen, which is particularly present at interfaces and voids in the powder bed, locally limiting conversion of the polymerizable material. This may adversely affect achievable strength of the part formed and give rise to undesirable gradients in material properties between regions of high degree of conversion of the polymerizable material to regions of lower degree of conversion of the polymerizable material. The liquid binder according to the present invention may further comprises an oxygen scavenger.

Suitable oxygen scavengers may include trivalent phosphorus compounds; alkylamines, such as N-methyl diethanolamine (MDBA), or 1,4-diazabicyclo[2.2.2]octane (DABCO); thiols, such as trimethylolpropane tris(3-mercaptopropionate) (TMPMP); or pentaerythritol tetrakis(3-mercaptopropionate) (PETMP); hydrogenphosphites; silanes, such as tris(trimethylsilyl)silane (TTMSS); tin hydrides, such as tributyltin hydride; N-vinyl amides; sulfites, such as ethylene sulfite; singlet oxygen scavengers, such as 2,5-diphenylfuran (DPF), camphorquinones, 9,10-dibutyl anthracene (DBA); and combinations thereof. Preferably, the oxygen scavenger may comprise a trivalent phosphorus compound. The trivalent phosphorus compound may comprise a phosphine, a phosphite or a combination or a mixture thereof.

According to the present invention, the phosphine may comprise a trialkylphosphine and/or a triarylphosphine. The phosphite may comprises a trialkylphosphite and/or a triarylphosphite. In a preferred practice, the trivalent phosphorous compound may comprise triphenylphosphine, triethyl phosphine, triphenylphosphite, triethylphosphite, or a mixture or combination thereof.

The liquid binder may comprise the oxygen scavenger, preferably the trivalent phosphorous compound, in an amount of 0.001 wt.% or more, such as 0.01 wt.% or more, or 0.05 wt.% or more, based on the total weight of the liquid binder. The liquid binder may comprise the oxygen scavenger, preferably the trivalent phosphorous compound, in an amount of 10 wt.% or less, such as 5 wt.% or less, or 1 wt.% or less or 0.5 wt.% or less, or 0.2 wt.% or less, based on the total weight of the liquid binder. The liquid binder may comprise the oxygen scavenger, preferably the trivalent phosphorous compound, in an amount of from 0.001 to 10 wt.%, preferably from 0.01 to 1 wt.%, more preferably from 0.05 to 0.2 wt.%, based on the total weight of the liquid binder.

The liquid binder of the present invention may further comprise an accelerator. An accelerator can be used to accelerate the polymerization reaction, e.g. to proceed with notable rate at a relatively low reaction temperature such as under ambient conditions. As used herein, the term "ambient conditions" refers to room temperature, such as temperatures in the range of 18 to 25°C, and atmospheric pressure. Any accelerator known in the art for catalyzing or accelerating free radical polymerization reactions can be used. Suitable examples of accelerators comprise for instance amines such as tertiary amines like dimethyl-p-toluidine, dihydroxyethyl-p-toluidine or 4-dimethylamino phenethyl alcohol; transition metal catalyst such as cobalt (II) octoate, cobalt (II) naphthenate, vanadium (II) octoate or manganese naphthenate. Preferably, the accelerator comprises tertiary amines, more preferably dimethyl-p-toluidine, dihydroxyethyl-p-toluidine or 4-dimethylamino phenethyl alcohol.

The accelerator will be used in an amount that is effective for the intended purpose. The liquid binder may for instance comprise the accelerator in an amount of 0.001 wt.% or more, such as 0.01 wt.% or more, or 0.05 wt.% or more, or 0.1 wt.% or more, or 0.2 wt.% or more, or 0.5 wt.% or more, based on the total weight of the liquid binder. The liquid binder may for instance comprise the accelerator in an amount of 5 wt.% or less, such as 2 wt.% or less, or 1 wt.% or less, or 0.5 wt.% or less, or 0.3 wt.% or less, or 0.2 wt.% or less, or 0.1 wt.% or less, based on the total weight of the liquid binder. The liquid binder can for example comprise the accelerator in an amount in a range between any of the above-mentioned values, such as from 0.001 wt.% to 5%, or from 0.01 wt.% to 1 wt.%, or from 0.05 wt.% to 0.5 wt.%, based on the total weight of the liquid binder.

According to the present invention, the liquid binder may further comprise a solvent. A solvent can prevent clogging of printheads. Additionally, the solvent may fuse the powder particles by means of cold welding. Suitable solvents may include water and/or organic solvents, preferably organic solvents. Organic solvents may be selected from alcohols, such as methanol, ethanol, propanol, butanol, tert-amyl alcohol, benzyl alcohol, ethylene glycol, glycerol, and neopentyl alcohol; esters, such as dimethyl succinate, ethyl acetate, butyl acetate and isopropyl acetate; ketones, such as acetone, butanone, cyclopentanone, ethyl isopropyl ketone, methyl isopropyl ketone, methyl isobutyl ketone; and combinations thereof, preferably esters, such as dimethyl succinate, ethyl acetate, butyl acetate and isopropyl acetate, preferably dimethyl succinate.

The liquid binder according to the present invention may comprise an organic solvent, preferably an ester, in an amount of 1 wt.-% or more, such as 2 wt.% or more, or 5 wt.% or more, or 7 wt.% or more, based on the total weight of the liquid binder. The liquid binder may comprise an organic solvent, preferably an ester, in an amount of 30 wt.-% or less, such as 25 wt.% or less, or 20 wt.% or less, or 15 wt.% or less, based on the total weight of the liquid binder. The liquid binder may comprise an organic solvent, preferably an ester, in an amount of from 1 to 30 wt.%, more preferably from 5 to 15 wt.%, based on the total weight of the liquid binder.

According to the present invention, the liquid binder may further comprise one or more than one additive selected from fillers, rheology modifying agents like viscosity modifiers, shrinkage minimizing agents, retardants, pH modifying agents, stabilizing agents, biocides, surfactants, humectants, wetting agents and colorants.

Shrinking minimizing agents may reduce deformation of the article during curing. Suitable shrinking minimizing agents may include 2,5-dimethylpropanediol and/or pentaerythriol. Pigments and colorants can be used to impart a desired color to the finished article. Suitable pigments may include zinc oxide, zinc sulfide, barium sulfate, titanium dioxide, zirconium silicate, lead carbonate, hollow borosilicate glass spheres and combinations thereof. Fillers may provide dimensional stability and adhesion for strength of the final article. Suitable fillers may include glass spheres, flakes or fibers; inorganic mineral fillers, such as wollastonite or mica; clay fillers, such as kaolin; starches, such as maltodextrin; plaster; polymeric fibers, such as cellulose fiber; ceramic fiber; graphite fiber; limestone; gypsum; aluminum oxide; aluminum silicate; potassium aluminum silicate; calcium silicate; calcium hydroxide; calcium aluminum; sodium silicate; metals; metal oxides, such as zinc oxide, titanium dioxide and magnetite; carbides, such as silicone carbide; borides, such as titanium diboride; and combinations thereof.

The liquid binder may have a viscosity of 1 mPas or more, such as 1.5 mPas or more, or 2 mPas or more, or 2.5 mPas or more. The liquid binder may have a viscosity of 50 mPas or less, such as 47 mPas or less, or 45 mPas or less, or 43 mPas or less. The liquid binder of the present invention may have a viscosity in a range from 1 to 50 mPas, such as 1 to 47 mPas, or 1.5 to 45 mPas. The viscosity may be measured with a rheometer as described in more detail below for the examples. The liquid binder may have a surface tension of 20 mN/m or more, such as 22 mN/m or more, or 25 mN/m or more, or 27 mN/m or more, or 30 mN/m or more. The liquid binder may have a surface tension of 50 mN/m or less, such as 47 mN/m or less, or 45 mN/m or less, or 43 mN/ or less, or 40 mN/m or less. The surface tension may be measured with a tensiometer as described in more detail below for the examples. The liquid binder can for example have a surface tension in a range between any of the above-mentioned values, such as from 20 to 50 mN/m, or 22 to 47 mN/m, or 25 to 45 mN/m. Liquid binders having a viscosity and/or a surface tension in the above-described ranges may help prevent undesirable flooding of lower layers of the powder bed by the liquid binder.

The liquid binder may be used in an amount of 15 wt.% or more, such as 18 wt.% or more, or 20 wt.% or more, based on the weight of the printed article (amount of powder composition to be solidified plus the liquid binder added). The liquid binder may be used in an amount of 45 wt.% or less, such as 40 wt.% or less, or 35 wt.% or less, based on the weight of the printed article (amount of powder composition to be solidified plus the liquid binder added). The liquid binder can for example be used in a range between any of the above-mentioned values, such as in a range of from 15 to 45, preferably from 20 to 35 wt.%, based on the weight of the printed article (amount of powder composition to be solidified plus the liquid binder added).

According to the present invention, the material system comprises a powder composition. "Powder composition" as used herein means a composition in the form of a powder, that is bulk solid matter composed of many fine particles, which may flow freely. The powder composition used in the material system according to the present invention comprises a first type of polymer particles and a second type of polymer particles. The first type of polymer particles and the second type of polymer particles are different from each other and each comprise an initiator for a free radical polymerization reaction.

The first type of polymer particles according to the present invention are swellable or dissolvable in the liquid binder at room temperature, e.g. at a temperature in a range of from 18 to 25 °C, and thereby release contained initiator for a first free radical polymerization of the polymerizable material. The second type of polymer particles releases additional initiator upon contact with the liquid binder at elevated temperatures above 40°C, such as in a range of from 40 to 130 °C, for a further radical polymerization of the polymerizable material.

The second type of polymer particles may have a higher glass transition temperature than the first type of polymer particles. The second type of polymer particles for instance may have a higher glass transition temperature that is at least 20°C, preferably at least 30°C or at least 40°C, higher than the glass transition temperature of the first type of polymer particles. The glass transition temperatures of the polymer particles refer to glass transition temperatures as determined by differential scanning calorimetry (DSC). The skilled person is aware in this context that DSC is only sufficiently conclusive if, after an initial heating cycle to a temperature that is at least 25 °C above the highest glass transition or melting temperature but at least 20 °C below the lowest decomposition temperature of a material, the material sample is kept at this temperature for at least 2 min. The sample is then cooled down to a temperature of at least 20 °C below the lowest glass transition or melting temperature to be determined, whereby the cooling rate should be a maximum of 20 °C/min, preferably a maximum of 10 °C/min. After a further waiting time of a few minutes, the actual measurement then takes place, during which the sample is heated to at least 20 °C above the highest melting or glass transition temperature at a heating rate of generally 10 °C/min or less. The respective highest and lowest limit temperatures can be roughly specified in simple preliminary measurements with a separate sample.

According to the present invention, the first type of polymer particles may have a glass transition temperature of 70 °C or less, such as 67 °C or less, or 65 °C or less. The first type of polymer particles may have a glass transition temperature of 40 °C or more, such as 45 °C or more, or 50 °C or more, or 55 °C or more. A person skilled in the art will appreciate that any range between any of the explicitly disclosed lower and upper limit is herein disclosed. Typically, the glass transition temperature of the first type of polymer particles ranges from 40 to 70 °C, preferably from 45 to 70 °C, more preferably from 50 to 70 °C. The glass transition temperature may be determined by DSC as described above.

According to the present invention, the second type of polymer particles may have a glass transition temperature of 80 °C or more, such as 85 °C or more, or 90 °C or more, or 95 °C or more. The second type of polymer particles may have a glass transition temperature of equal to or less than 130 °C, such as equal to or less than 125 °C, or equal to or less than 120 °C, or equal to or less than 115 °C. A person skilled in the art will appreciate that any range between any of the explicitly disclosed lower and upper limit is herein disclosed. Typically, the glass transition temperature of the second type of polymer particles ranges from 80 to 130 °C, preferably from 85 to 130 °C, more preferably from 90 to 130 °C, even more preferably from 90 to 120 °C, most preferably from 95 to 120 °C. The glass transition temperatures of the polymer particles refer to glass transition temperatures as determined by differential scanning calorimetry (DSC) as described above.

The type of polymer of the first type of polymer particles and/or the second type of polymer particles is not particularly limited, such that particles of any known kind of polymer can in principle be used as long as the first type of polymer particles are swellable or dissolvable in the liquid binder at room temperature and the second type of polymer particles releases additional initiator upon contact with the liquid binder at elevated temperatures above 40 °C. For instance, the first type of polymer particles and/or the second type of polymer particles comprising polyetherketone such as polyaryletherketone (PAEK), polyetheretherketone (PEEK) and poly(etherketoneketone) (PEKK); polyethersulfone (PES); polyimide (PI); polyetherimide (PEI); polyester, such as polybutylene terephthalate (PBT); polyamide (PA); polycarbonate (PC); polyurethane (PU); polyvinyl chloride (PVC); polyoxymethylene (POM); polyvinyl acetate (PVA); poly(meth)acrylate, such as polymethylmethacrylate (PMMA), and polymethylacrylate (PMA); polystyrene (PS); polyethylene (PE); polypropylene (PP); acrylonitrile butadiene styrene (ABS) copolymer; polycarbonate acrylonitrile butadiene styrene blends (PC-ABS); or mixtures or copolymers thereof can be used in the practice of the present invention. Such polymers can be obtained by polymerization of respective monomers and/or oligomeric materials according to common polymerization techniques, such as emulsion or suspension polymerization, which are as such well known in the art and therefore not described here in more detail. Polymer powders can be obtained by separating the polymer particles from the liquid phase, such as by filtering or decanting and subsequent drying at room temperature, e.g. temperatures in a range of from 18 to 25 °C, or at elevated temperature, e.g. temperatures in the range of from 40 to 50 °C. Polymer powders can also be obtained for example by spray drying of respective polymer dispersions, by wet grinding of respective polymer suspensions, by cryogenic grinding of bulk polymers or by melt emulsification of polymer suspensions.

The first type of polymer particles may comprise acrylic polymer particles. An "acrylic polymer" as used herein means a polymer comprising at least 50 wt.% of constituting units derived from (meth)acrylate monomers.

Acrylic polymer particles may be obtained by polymerization of a monomer mixture comprising (meth)acrylate monomers. Suitable (meth)acrylate monomers may be selected from, but not limited to, alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate, nonyl (meth)acrylate, decyl (meth)acrylate, dodecyl (meth)acrylate and combinations thereof; hydroxyalkyl (meth)acrylates; such as hydroxyethyl (meth)acrylate, hydroxypropyl (meth)acrylate, hydroxybutyl (meth)acrylate, and combinations thereof, preferably alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate and combinations thereof. The acrylic polymer particles can in particular be made by suspension polymerization. Alternatively, the second type of polymer particles may comprise acrylic polymer particles. Preferably, the first type of polymer particles and the second type of polymer particles comprise acrylic polymer particles. Such beaded acrylic polymers are commercially available for example as Degacryl^{®} polymers from Evonik Operations GmbH such as Degacryl^{®} MW134, Degacryl^{®} MW422, Degacryl^{®} M286, Degacryl^{®} M527, Degacryl^{®} 6606F or Degacryl^{®} 6946F.

According to the present invention, the first type of polymer particles may comprise a copolymer obtained by copolymerizing a monomer mixture comprising a plurality of different (meth)acrylate monomers. Suitable (meth)acrylate monomers may be selected from, alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate, nonyl (meth)acrylate, decyl (meth)acrylate, dodecyl (meth)acrylate and combinations thereof; hydroxyalkyl (meth)acrylates; such as hydroxyethyl (meth)acrylate, hydroxypropyl (meth)acrylate, hydroxybutyl (meth)acrylate, and combinations thereof, preferably alkyl (meth)acrylates, such as methyl (meth)acrylate, ethyl (meth)acrylate, propyl (meth)acrylate, butyl (meth)acrylate, hexyl (meth)acrylate, ethyl hexyl (meth)acrylate, iso-octyl (meth)acrylate, cyclohexyl (meth)acrylate, nonyl (meth)acrylate, decyl (meth)acrylate, dodecyl (meth)acrylate and combinations thereof, more preferably methyl (meth)acrylate and combinations thereof, even more preferably methyl methacrylate. The monomer mixture may further comprise monomers being different from (meth)acrylate monomers, such as styrene, 1,3-butadiene, vinyl chloride, acrylonitrile, vinyl acetate and combinations thereof.

The first type of polymer particles may comprise a copolymer comprising at least 60 wt.%, such as at least 63 wt.%, or at least 65 wt.%, or at least 67 wt.%, or at least 70 wt.% of structural units derived from methyl methacrylate. The first type of polymer particles may comprise a copolymer comprising up to 90 wt.%, such as up to 87 wt.%, or up to 85 wt.%, or up to 83 wt.%, or up to 80 wt.% of structural units derived from methyl methacrylate. A person skilled in the art will appreciate that any range between any of the explicitly disclosed lower and upper limit is herein disclosed. The first type of polymer particles may comprise a copolymer comprising in a range of 60 to 90 wt.%, more preferably 60 to 85 wt.-% of structural units derived from methyl methacrylate.

The first type of polymer particles may comprise a copolymer comprising at least 2 wt.%, such as at least 5 wt.%, or at least 7 wt.%, or at least 10 wt.%, or at least 12 wt.% of structural units derived from methyl acrylate. The first type of polymer particles may comprise a copolymer comprising up to 50 wt.%, such as up to 47 wt.%, or up to 45 wt.%, or up to 43 wt.%, or up to 40 wt.% of structural units derived from methyl acrylate. A person skilled in the art will appreciate that any range between any of the explicitly disclosed lower and upper limit is herein disclosed. The first type of polymer particles may comprise a copolymer comprising in a range of 2 to 50 wt.%, more preferably 5 to 45 wt.-% of structural units derived from methyl acrylate preferably.

The powder composition according to the present invention may comprise the first type of polymer particles in an amount of at least 1 wt.%, such as at least 1.5 wt.%, or at least 2 wt.%, or at least 2.5 wt.%, or at least 3 wt.%, or at least 3.5 wt.%, based on the total weight of the powder composition. The powder composition according to the present invention may comprise the first type of polymer particles in an amount of up to 15 wt.%, such as up to 12 wt.%, or up to 10 wt.%, or up to 8 wt.%, based on the total weight of the powder composition. A person skilled in the art will appreciate that any range between any of the explicitly disclosed lower and upper limit is herein disclosed. The powder composition may comprise the first type of polymer particles in an amount of from 1 to 15 wt.%, preferably from 1 to 12 wt.%, more preferably from 2 to 10 wt.%, even more preferably from 3 to 8 wt.%, based on the total weight of the powder composition.

The second type of polymer particles may comprise poly(alkyl methacrylate), preferably poly(methyl methacrylate). The second type of polymer particles can in particular comprise at least 60 wt.%, such as at least 63 wt.%, or at least 65 wt.%, or at least 67 wt.%, or at least 70 wt.% of structural units derived from methyl methacrylate. The second type of polymer particles may comprise a copolymer comprising up to 90 wt.%, such as up to 87 wt.%, or up to 85 wt.%, or up to 83 wt.%, or up to 80 wt.% of structural units derived from methyl methacrylate. A person skilled in the art will appreciate that any range between any of the explicitly disclosed lower and upper limit is herein disclosed. The second type of polymer particles may comprise a copolymer comprising in a range of 60 to 90 wt.%, more preferably 60 to 85 wt.-% of structural units derived from methyl methacrylate.

The powder composition according to the present invention may comprise the second type of polymer particles in an amount of at least 1 wt.%, such as at least 2 wt.%, or at least 5 wt.%, or at least 8 wt.%, or at least 10 wt.%, or at least 12 wt.%, based on the total weight of the powder composition. The powder composition according to the present invention may comprise the second type of polymer particles in an amount of up to 25 wt.%, such as up to 22 wt.%, or up to 20 wt.%, or up to 18 wt.%, based on the total weight of the powder composition. A person skilled in the art will appreciate that any range between any of the explicitly disclosed lower and upper limit is herein disclosed. The powder composition may comprise the second type of polymer particles in an amount of from 1 to 25 wt.%, preferably from 1 to 22 wt.%, more preferably from 5 to 20 wt.%, even more preferably from 10 to 20 wt.%, based on the total weight of the powder composition.

The powder composition may comprise from 1 to 15 wt.%, preferably from 1 to 12 wt.%, more preferably from 2 to 10 wt.%, even more preferably from 3 to 8 wt.% of the first type of polymer particles and from 1 to 25 wt.%, preferably from 1 to 22 wt.%, more preferably from 5 to 20 wt.%, even more preferably from 10 to 20 wt.% of the second type of polymer particles, the weight percentages being based on the total weight of the powder composition.

According to the present invention, the powder composition may contain the first type of polymer particles and the second type of polymer particles in amounts corresponding to a weight ratio in a range from 1:20 to 5:1, preferably from 1:15 to 1:1 or from 1:10 to 1:2.

The first type of polymer particles and/or the second type of polymer particles according to the present invention may each be characterized by their shape and/or particle sizes. As will be understood by a skilled artisan, a powder of a type of polymer particles will generally comprise a plurality of particles of the polymer having different sizes, that is a particle size distribution. The particle size distribution can be measured by dynamic light scattering (DLS). For the DLS measurement, a highly diluted dispersion of the polymer particles in water, such as a concentration in a range of 0.1 to 10 g/L, is used. The skilled person is aware that in this context the DLS is only sufficiently conclusive, if, agglomeration or swelling of the particles does not take place. Therefore, the particle distribution is measured several times to detect time dependent changes of the particle sizes. The first type of polymer particles and/or the second type of polymer particles used in the powder composition according to the present invention typically have a rather narrow particle size distribution with a span (Dv90-Dv10)/Dv50 in a range from 0.7 to 1.3, such as from 0.8 to 1.2 or from 0.9 to 1.1. The first type of polymer particles and/or the second type of polymer particles may each have a median particle size Dv50 in a range from 5 µm to 200 µm, such as from 10 to 100 µm, preferably from 20 to 80 µm or from 30 to 70 µm.

The first type of polymer particles and/or the second type of polymer particles preferably have a rounded and/or spherical shape as this promotes flowability and a formation of compact powder layers. Sphericity is a measure of the degree to which a particle approximates the shape of a sphere-like object, and is independent of its size. Roundness is the measure of the sharpness of a particle's edges and corners. The sphericity and roundness may be determined based on Wadell's definitions, i.e., Wadell's sphericity and roundness indices. The first type of polymer particles and/or the second type of polymer particles may for example exhibit a sphericity in a range from 0.9 to 1.0.

According to the present invention, the first type of polymer particles, preferably the first type of acrylic polymer particles, may comprise the initiator in an amount of 0.1 wt.% or more, such as 0.2 wt.% or more, or 0.5 wt.% or more, based on the total weight of the first type of polymer particles. The first type of polymer particles, preferably the first type of acrylic polymer particles, may comprise the initiator in an amount of 10 wt.% or less, such as 9 wt.% or less, or 7 wt.% or less, or 5 wt.% or less, based on the total weight of the first type of polymer particles. The first type of polymer particles can for example comprise the initiator in an amount in a range between any of the above-mentioned values, such as from 0.1 to 10 wt.%, such as from 0.1 to 9 wt.%, or from 0.2 to 7 wt.%, or from 0.5 to 5 wt.%, based on the total weight of the first type of polymer particles.

According to the present invention, the second type of polymer particles, preferably the second type of acrylic polymer particles, may comprise the initiator in an amount of 0.1 wt.% or more, such as 0.2 wt.% or more, or 0.5 wt.% or more, based on the total weight of the second type of polymer particles. The second type of polymer particles, preferably the second type of acrylic polymer particles, may comprise the initiator in an amount of 10 wt.% or less, such as 9 wt.% or less, or 7 wt.% or less, or 5 wt.% or less, based on the total weight of the second type of polymer particles. The second type of polymer particles can for example comprise the initiator in an amount in a range between any of the above-mentioned values, such as from 0.1 to 10 wt.%, such as from 0.1 to 9 wt.%, or from 0.2 to 7 wt.%, or from 0.5 to 5 wt.%, based on the total weight of the second type of polymer particles.

In a preferred practice, first type of acrylic polymer particles and the second type of polymer particles each may comprise the initiator in an amount from 0.1 to 10 wt.%, such as from 0.1 to 9 wt.%, or from 0.2 to 7 wt.%, or from 0.5 to 5 wt.%, based on the total weight of the first type of polymer particles or the weight second type of polymer particles, respectively.

The initiator may be incorporated into the first type of polymer particles and/or into the second type of polymer particles. Accordingly, the initiator can for example be dispersed, dissolved and/or encapsulated in the first type of polymer particles and/or into the second type of polymer particles. For example, polymerization can be carried out with a more active initiator, such as bis(tert-butylcyclohexyl) peroxydicarbonate (BCHPC), in the presence of a less active initiator, such as dibenzoyl peroxide, at low temperatures, e.g., temperatures in the range of 40 to 60°C, leaving the less active initiator intact and incorporated into the polymer particles. Alternatively, the initiator may be present at a surface of the first and/or second type of polymer particles. Accordingly, the initiator can for example be applied as a coating thereto. This can be achieved in particular by adding the respective initiator only at the end of the polymerization to be present at the surface of the polymer particles. Additionally, it is possible to coat the initiator catalyst and/or accelerator onto the surface of the polymer particles after polymerization via spray drying techniques.

Initiators that can be used according to the present invention include any substances commonly used for initiating free radical polymerizations. This includes for instance organic peroxides, such as aromatic peroxides like dibenzoyl peroxide, ketone peroxides such as methylethylketone peroxide or acetylacetone peroxide, hydroperoxides, persulphates, percarbonates, or azo initiators such as azobisisobutyronitrile (AIBN). According to the present invention, the initiator comprises an organic peroxide, preferably an aromatic peroxide such as dibenzoyl peroxide.

The powder composition of the present invention may further comprise at least one additional type of polymer particles, which differs from the first and second types of polymer particles. The type of polymer of the additional type of polymer particles is not particularly limited, such that particles of any known kind of polymer can in principle be used in the practice of the present invention. For instance, the at least one additional type of polymer particles comprising polyetherketone such as polyaryletherketone (PAEK), polyetheretherketone (PEEK) and poly(etherketoneketone) (PEKK); polyethersulfone (PES); polyimide (PI); polyetherimide (PEI); polyester, such as polybutylene terephthalate (PBT); polyamide (PA); polycarbonate (PC); polyurethane (PU); polyvinyl chloride (PVC); polyoxymethylene (POM); polyvinyl acetate (PVA); poly(meth)acrylate, such as polymethylmethacrylate (PMMA), and polymethylacrylate (PMA); polystyrene (PS); polyethylene (PE); polypropylene (PP); acrylonitrile butadiene styrene (ABS) copolymer; polycarbonate acrylonitrile butadiene styrene blends (PC-ABS); or mixtures or copolymers thereof can be used. Such polymers can be obtained as described above.

The at least one additional type of polymer particles may comprise acrylic polymer particles. The acrylic polymer particles may be obtained as described above. Preferably, the at least one additional type of acrylic particles comprises at least 60 wt.%, such as at least 63 wt.% or at least 65 wt.%, or at least 67 wt.% or at least 70 wt.% of structural units derived from methyl methacrylate.

The at least one additional type of polymer particles may have a glass transition temperature of 80 °C or more, such as 85 °C or more, or 90 °C or more, or 95 °C or more. The at least one additional type of polymer particles may have a glass transition temperature of equal to or less than 120 °C, such as equal to or less than 115 °C, or equal to or less than 110 °C, or equal to or less than 105 °C. A person skilled in the art will appreciate that any range between any of the explicitly disclosed lower and upper limit is herein disclosed. Typically, the glass transition temperature of the at least one additional type of polymer particles ranges from 80 to 120 °C, preferably from 85 to 115 °C, more preferably from 90 to 110 °C, even more preferably from 90 to 105 °C. The glass transition temperatures of the at least one additional type of polymer particles refer to glass transition temperatures as determined by differential scanning calorimetry (DSC) as described above.

The powder composition according to the present invention may comprise the at least one additional type of polymer particles in an amount of at least 60 wt.%, such as at least 62 wt.% or at least 65 wt.% or at least 67 wt.% or at least 70 wt.%, based on the total weight of the powder composition. The powder composition according to the present invention may comprise the at least one additional type of polymer particles in an amount of up to 95 wt.%, such as up to 92 wt.% or up to 90 wt.% or up to 88 wt.% or up to 85 wt.%, based on the total weight of the powder composition. A person skilled in the art will appreciate that any range between any of the explicitly disclosed lower and upper limit is herein disclosed. The powder composition may comprise the at least one additional type of polymer particles in an amount of from 60 to 95 wt.%, preferably from 60 to 92 wt.%, more preferably from 60 to 90 wt.%, even more preferably from 65 to 85 wt.%, based on the total weight of the powder composition.

The at least one additional type of polymer particles may be characterized by its shape and/or particle sizes. As will be understood by a skilled artisan, a powder of a type of polymer particles will generally comprise a plurality of particles of the polymer having different sizes, that is a particle size distribution. The particle size distribution can be measured by dynamic light scattering as described above. The at least one additional type of polymer particles used in the powder composition typically has a rather narrow particle size distribution with a span (Dv90-Dv10)/Dv50 in a range from 0.7 to 1.3, such as from 0.8 to 1.2 or from 0.9 to 1.1. The at least one additional type of polymer particles may have a median particle size Dv50 in a range from 5 µm to 200 µm, such as from 10 to 100 µm, preferably from 20 to 80 µm or from 30 to 70 µm.

The at least one additional type of polymer particles preferably has a rounded and/or spherical shape. The at least one additional type of polymer particles may for example exhibit a sphericity in a range from 0.9 to 1.0. The sphericity and roundness may be determined as described above.

The above-described at least one additional type of polymer particles, preferably acrylic polymer particles, may be substantially free, or completely free, from an initiator, catalyst or accelerator. "Substantially free" as used herein means that the recited elements are not deliberately added in the preparation of the polymer particles, but may be nevertheless present in trace amounts, such as up to 10 ppm, due to contamination. "Completely free" as used herein means that the recited elements are not present (in a measurable amount) in the polymer particles. Accordingly, the at least one additional type of polymer particles, preferably comprising acrylic polymer particles, may not comprise an initiator, a catalyst or an accelerator for a free radical polymerization reaction.

The powder composition may comprise from 1 to 15 wt.%, preferably from 1 to 12 wt.%, more preferably from 2 to 10 wt.%, even more preferably from 3 to 8 wt.% of the first type of polymer particles; from 1 to 25 wt.%, preferably from 1 to 22 wt.%, more preferably from 5 to 20 wt.%, even more preferably from 10 to 20 wt.% of the second type of polymer particles and from 60 to 95 wt.%, preferably from 60 to 92 wt.%, more preferably from 60 to 90 wt.%, even more preferably from 65 to 85 wt.% of the at least one additional type of polymer particles, the weight percentages being based on the total weight of the powder composition. According to the present invention, the amounts of the first, second and at last one additional types of polymer particles may add up to 100 wt.%.

The powder composition may optionally comprise further ingredients. For instance, it can include one or more other particulate materials in addition to the first and second type of polymer particles. Non-limiting examples of such further particulate materials include metal particles, glass beads, ceramic, mineral or other particulate materials such as pigments or fillers like carbon black, clay, silica, silicates or metal oxides, or a mixture or combination thereof. These other particulate materials can be present in the powder composition in the form of separate particles in addition to the polymer particles. In addition or alternatively, they can be incorporated in at least a portion of the above-described polymer particles, e.g. as a filler encapsulated by or dispersed in the polymer particles. The optional further particulate materials, if used, may be present in the powder composition in an amount of 0.1 wt.% or more, such as 0.5 wt.% or more, or 1 wt.% or more, or 2 wt.% or more, or 5 wt.% or more, or 10 wt.% or more, based on the total weight of the powder composition. They can for example be used in an amount of 40 wt.% or less, such as 30 wt.% or less, or 20 wt.% or less, or 10 wt.% or less, or 5 wt.% or less, or 2 wt.% or less, or 1 wt.% or less, based on the total weight of the powder composition. The powder composition can for example comprise the optional further particulate materials, if used, in an amount in a range between any of the above-mentioned values, such as from 0.1 wt.% to 40%, or from 1 wt.% to 20 wt.%, or from 2 wt.% to 10 wt.%, based on the total weight of the powder composition.

The powder composition may optionally contain one or more further additive(s) that may be used in the art of powder technology. For example, the powder composition of the present invention can comprise one or more flow or anti-caking agent to adjust the rheological properties and/or avoid a formation of lumps. Illustrative examples of flow or anti-caking agents that can be used in the practice of the present invention include for instance stearates, e.g. of zinc, aluminum, calcium or magnesium, silica (e.g. pyrogenic silica), silicates, aluminosilicates, fluoroplastics or talc. The powder composition can comprise the flow or anti-caking agent(s), if used, in any effective amount, typically the flow or anti-caking agent(s) may be used in an amount of 0.01 wt.% or more, such as 0.02 wt.% or more, or 0.05 wt.% or more, or 0.1 wt.% or more, based on the total weight of the powder composition. The flow or anti-caking agent(s) may for example be used in an amount of 1 wt.% or less, such as 0.5 wt.% or less, or 0.2 wt.% or less, based on the total weight of the powder composition. The powder composition can for example comprise flow or anti-caking agent(s) in an amount in a range between any of the above-mentioned values, such as from 0.01 wt.% to 1%, or from 0.05 wt.% to 0.5 wt.%, or from 0.1 wt.% to 0.2 wt.%, based on the total weight of the powder composition.

The powder composition according to the present invention can be prepared using common powder formulation techniques and equipment. The first and second type of polymer particles and any additional optional ingredients to be used, such as those described above, may accordingly be combined in the desired relative amounts and mixed until a homogenous powder is obtained.

The powder composition used according to the present invention is advantageously easily flowable such that it can be applied in compact powder layers, e.g. by a mechanical applicator of a 3D printer. The powder composition may have a bulk density of 500 g/L or more, such as 600 g/L or more, or 650 g/L or more. It may for example have a bulk density of 800 g/L or less, such as 750 g/L or less, or 720 g/L or less. The powder composition can for example have a bulk density in a range between any of the above-mentioned values, such as from 500 g/L to 800 g/L, or from 600 to 750 g/L, or from 650 to 720 g/L. The bulk density may be determined according to DIN EN ISO 60:1999.

The present invention further relates to use of the material system of the present invention for three-dimensional printing.

Furthermore, the present invention relates to a three-dimensional article prepared by three-dimensional printing using the material system according to the present invention.

The three-dimensional article may comprise 20 wt.%, or more preferably 25 wt.% or more, of the liquid binder, based on the total weight of the article. The three-dimensional article may comprise 40 wt.% or less, or more preferably 35 wt.% or less, of the liquid binder, based on the total weight of the article. The three-dimensional article may comprise the liquid binder in range of from 20 to 40 wt.%, such as from 20 to 35 wt.%, based on the total weight of the article.

According to the present invention, the three-dimensional article printing may comprise the steps of (a) providing a layer of the powder composition of the material system according to the present invention on the building platform of a 3D printer; (b) selectively applying by a printhead of the 3D printer a liquid binder of the material system according to the present invention to one or more areas of the layer, which are to be solidified; (c) repeating steps (a) and (b) layer-by-layer until a three-dimensional article of the desired shape has been formed; (d) keeping the formed three-dimensional article at room temperature, such as at a temperature in a range of from 18 to 25 °C, for partial curing to obtain a green body of the article; and (e) further curing the green body at a temperature above 40 °C, such as in a range of from 40 to 130 °C, to obtain the final cured three-dimensional article. Preferably, curing at elevated temperatures is performed after removing the unbound powder. Curing at room temperature may be performed for 30 hours or less, such as for 20 to 30 hours. Curing at elevated temperatures may be performed for 7 hours or less, such as 2 to 7 hours.

The three-dimensional article of the present invention may have a green body strength in a range of 0.3 to 1 mm after 30 hours or less at room temperatures. A green body strength in the described range indicates a good partial curing and therefore a sufficient green body strength, which allows handling of the green bodies without deformation or damage. The term "green body" as used herein describes an article whose main constituents are weakly bound before it has been sintered or cured at elevated temperatures. The green body strength may be determined as described below for the examples.

After curing the three-dimensional article at elevated temperatures, a final cured article may be obtained. According to the present invention, the final cured article may have a tensile strength of 20 MPa or more, such as 21 MPa or more, or 22 MPa or more. The final cured article of the present invention may have a tensile strength of 30 MPa or less such as 29 MPa or less, or 28 MPa or less. The final cured article of the present invention may have a tensile strength in a range of 20 to 30 MPa, such as 20 to 29 MPa, or 21 to 28 MPa. According to the present invention, the final cured article may have an elongation at break of 3.0% or more, such as 3.1% or more, or 3.2% more. The final cured article of the present invention may have an elongation at break of 7.0% or less such as 6.8% or less, or 6.6% or less. The final cured article of the present invention may have an elongation at break in a range of 3.0 to 7.0%, such as 3.0 to 6.8%, or 3.1 to 6.6%. The tensile strength and the elongation at break can be determined according to DIN EN ISO 527-1 as further described below for the examples. High tensile strength and elongation at break indicate better binding between particles, lower porosity and better mechanical stability.

The three-dimensional article may exhibit a deflection Δz of less than 8 mm, such as less than 5 mm, in an oven stability test with a protrusion of 4 cm. The deflection Δz in an oven stability test with a protrusion of 4 cm may be determined as described below for the examples. A smaller deflection value Δz denotes good form stability in the curing step at elevated temperature, indicating more effective curing and/or monomer conversion at ambient conditions in the powder bed.

According to the present invention, the three-dimensional article may have a porosity of less than 15 vol.%. The porosity may be measured by mercury porosimetry. Low porosity indicated enhanced mechanical properties of the three-dimensional article.

### EXAMPLES

All parts and percentages mentioned herein are based on weight, unless indicated otherwise.

### Liquid binder

Liquid binder compositions were prepared by adding hydroxyethyl methacrylate (HEMA), hydroxybutyl acrylate (HBA), ethyl methacrylate (EMA), ethylene glycol dimethacrylate (EGDMA), dimethyl succinate (DMS), diethanol para-toluidine (DEPT) and triphenylphosphine (TTP) in the relative amounts specified in Table 1 in a 1 L glass vessel. The mixture was each homogenized by stirring for 2 h at ambient temperature yielding a clear, colorless liquid. The viscosity of the thus obtained binder formulation was measured with a Malvern Instruments Kinexus Standard rheometer manufactured by Malvern Pananalytical Ltd. at a temperature of 30°C and a shear rate of 1000 s⁻¹. The density of the formulation was measured with a tensiometer K100 MK3 manufactured by Krüss GmbH. Furthermore, the surface tension of the formulation was also measured with the K100 MK3 tensiometer using the Wilhelmy-method. The results of these measurements are included in Table 1.

**Table 1: Binder compositions and properties**

| **Binder component** | **Parts by weight** |
|---|---|
| HEMA¹ | 21.6 |
| HBA² | 60.6 |
| DMS³ | 10.8 |
| EMA⁴ | 4.7 |
| EGDMA⁵ | 2 |
| DEPT⁶ | 0.15 |
| TTP⁷ | 0.06 |

| **Property** | |
|---|---|
| Viscosity [mPas] | 3.7 |
| Density [g/mL] | 1.04 |
| Surface tension [mN/m] | 36.3 |

| | |
|---|---|
| ¹: hydroxyethyl methacrylate (from Röhm GmbH) ²: hydroxybutyl acrylate (from Tokyo Chemicals Co. Ltd.) ³: dimethyl succinate (from Merck KGaA) ⁴: ethyl methacrylate (from Merck KGaA) ⁵: ethylene glycol dimethacrylate (from Evonik Operations GmbH) ⁶: diethanol para-toluidine (from Saltigo GmbH) ⁷: triphenylphosphine (from Merck KGaA) | |

### Powder composition

Degacryl^{®} bead polymers commercially available from Evonik Industries were mixed in the relative amounts indicated in Table 2 to form a homogeneous powder composition. The glass transition temperature (Tg) of the polymer particles was measured by means of a differential scanning calorimeter (DSC) from Mettler Toledo GmbH (USA) according to DIN EN ISO 11357. The bulk density of the polymer particles is determined according to DIN EN ISO 60:1999.

**Table 2: Powder compositions**

| **Component** | **Example 1** | **Example 2** | **Example 3** | **Example 4** **(Comparative Example)** |
|---|---|---|---|---|
| | **wt.%** | **wt.%** | **wt.%** | **wt.%** |
| A⁸ | 80 | 70 | 0 | 80 |
| B⁹ | 15 | 15 | 15 | 0 |
| C¹⁰ | 5 | 5 | 5 | 20 |
| D¹¹ | 0 | 0 | 70 | 0 |
| E¹² | 0 | 10 | 10 | 0 |

| **Property** | | | | |
|---|---|---|---|---|
| Powder bulk density [g/cm³] | 0.658 | 0.685 | 0.714 | n.d. |

| | | | | |
|---|---|---|---|---|
| ⁸: Degacryl^{®} acrylic polymer bead MW332 with T_{g}: 98°C (from Evonik Operations GmbH) ⁹: Dibenzoyl peroxide containing Degacryl^{®} acrylic polymer bead 6658F with T_{g}: 108°C (from Evonik Operations GmbH) ¹⁰: Dibenzoyl peroxide containing Degacryl^{®} acrylic polymer bead 6659F with T_{g}: 60°C (from Evonik Operations GmbH) ¹¹: Degacryl^{®} acrylic polymer bead M546 with T_{g}: 115 °C (from Evonik Operations GmbH) ¹²: Degacryl^{®} acrylic polymer bead 6625 with T_{g}: 108 °C (from Evonik Operations GmbH) T_{g} refers to the glass transition temperature as determined by differential scanning calorimetry n. d.: not determined. | | | | |

### 3D Printing

Test specimen were prepared by 3D printing using the above-described binder composition in combination with the formulation according to Example 1, Example 2, Comparative Example 3 or Comparative Example 4, respectively, as powder composition. 3D printing was carried out with a VX200 binder jetting machine manufactured by voxeljet AG (Friedberg, Germany), equipped with a Spectra Nova 256 print head. For 3D printing the liquid binder formulation was filled into the fluid supply of the 3D printer. Powder layers having a thickness of about 150 µm were successively applied from the respective powder composition by the coating unit of the 3D printer on the building platform and liquid binder locally applied thereto by the printhead of the 3D printer according to a predetermined profile to build the test specimen layer by layer. The liquid binder was used herein at a binder load of 28 wt.%. Binder load means the amount of binder with regard to the overall mass of powder and binder of an individual voxel. Rectangular test specimen having dimensions of 80 x 40 x 10 mm for oven stability tests as well as tensile test specimens having test specimen shape 1A according to DIN EN ISO 527-1 were thus printed oriented in a plane (xy) parallel to the building platform. The used liquid binder composition was well printable without any processing problems encountered. After the printing process, the green bodies of the test specimens were left for 24 h in the powder bed at ambient conditions. Afterwards, the test specimens were taken out of the powder bed and mechanically freed from powder residues. Subsequently, the test specimens were heated to 70 °C for 5 h in a drying oven of type FDL 115 manufactured by the Binder GmbH (Tuttlingen, Germany).

The green body strength of the test specimen taken out of the powder bed after the 24 h dwell time at ambient conditions was measured. To this end, a tensile test specimen was subjected to a needle penetration test. A needle with a tip diameter of 1.0 mm was positioned with its long axis perpendicular to and its tip in contact with the surface of the test specimen. A load of 1.220 kg was applied onto the needle. After 60 s, the penetration depth under load was recorded as a measure of the green body strength. Due to the thickness of 4 mm of the test specimen in the direction of penetration, the penetration depth can have values between 0 (no penetration) and 4 mm (full penetration of the test specimen).

The tensile test specimens were moreover investigated for their mechanical properties after the curing at 70 °C for 5 h in the oven. To this end, the oven cured tensile test specimen were characterized by tensile testing according to DIN EN ISO 527-1 with a pre-load of 10 N, a tensile modulus velocity of 1 mm/min, a testing speed of 20 mm/min and a clamping length of 115 mm using a tensile testing machine of type Zwick 1145 Retro Line manufactured by ZwickRoell GmbH & Co. KG.

The gross density of the printed test specimens was determined by a volumetric method with helium according to DIN 66137-2 using 1A test specimen and a gas pycnometer of type Accu-Pyc manufactured by Micromeritics GmbH (Germany).

Table 3 summarizes the green body strength, oven stability, tensile strength and elongation at break measured for the test samples printed using the formulation according to Example 1, Example 2, Example 3 or Comparative Example 4, respectively, as powder composition. The reported values each represent arithmetic averages of the results measured for five test specimens.

**Table 3: Properties of 3D printed articles**

| **Property** | **Powder composition used for printing** | | | |
|---|---|---|---|---|
| | **Ex. 1** | **Ex. 2** | **Ex. 3** | **Comp. Ex. 4** |
| Penetration depth in needle penetration test for green body strength | 1.0 mm | 0.8 mm | 1.2 mm | n. d. |
| Tensile strength at break | 25.5 MPa | 24.5 MPa | 22.0 MPa | n.d. |
| Elongation at break | 5.0 % | 2.9 % | 2.3 % | n.d. |
| Density | 1.193 g/cm³ | 1.179 g/cm³ | 1.100 g/cm³ | n.d. |

| | | | | |
|---|---|---|---|---|
| n.d.: not determined | | | | |

The results in Table 3 show that the printed test specimen attain sufficient green body strength upon storage for 24 h at room temperature, which allows handling of the green bodies without deformation or damage. The articles printed using the material system according to the present invention (Examples 1, 2 and 3) exhibit as indicated by the penetration depth in needle penetration test for green body strength significantly enhanced form stability upon curing at elevated temperatures compared to those obtained from Comparative Example 4. This facilitates the curing of the printed parts, especially the free standing portions, at elevated temperatures to achieve final properties outside of the powder bed without thermally-induced deformations and without the need of a support structure.

Furthermore, the articles printed using the powder composition according to the present invention (Examples 1 to 3) exhibit as indicated by the density of the printed articles good mechanical properties after the curing step at elevated temperature, indicative of an effective curing and/or monomer conversion at ambient conditions in the powder bed. It can be seen that the bulk densities of the powder compositions increase from Example 1 to Example 3, with the bulk density of Example 3 representing an optimized bulk density for 3D printing. It is typically expected that powder compositions with higher bulk densities will result in printed articles with higher densities. However, this is not the case here. Surprisingly, it can be seen that the density of the printed articles increases in the opposite direction, from Example 3 to Example 1. It is thus visible that no optimization of bulk density for powder compositions according to the present invention is necessary to obtain printed articles with high stability.

During the printing process for Comparative Example 4, a curling of the printed object in the powder bed was observed which indicates a rapid curing of the liquid binder upon contact powder composition. During the printing process the curling intensified to a degree that the green bodies were moved in the powder bed by the powder blading after 13 printed layers from a total of 26 printed layers. Due to the shifting of the partly printed objects in the powder bed the print job was interrupted and could not be finished. The quick curing indicates sufficient green body strength, however, the quick curing kinetics induce also deformation via curling of the printed objects which renders the Comparative Example 4 not suited for a binder jetting process.

Furthermore, the printed articles obtained using the material system according to Examples 1, 2 and 3 exhibit enhanced mechanical properties, notably a high tensile strength and elongation at break.

In addition, test specimens were printed as set forth above using the material system according to the present invention at different positions of the build chamber and also in different orientations (in the xy, xz, or zx plane) to investigate possible anisotropies based on object orientation or position in the powder bed. In 3D printing, printed parts often exhibit significant orientation-based anisotropies in their mechanical properties, for example a declining tensile strength, toughness and elongation in z-direction associated with non-optimal interlayer adhesion. On the contrary, it was found that the articles printed using the material system according to the present invention did not show an anisotropy of their tensile and flexural properties. This indicates that a good interlayer adhesion is achieved, with a sufficient amount of binder in the powder bed and sufficient time for the binder to fully penetrate the 150 µm thick layer and connect with the layer beneath.

## Claims

1. A material system for three-dimensional printing comprising:
(a) a liquid binder comprising a material polymerizable by free radical polymerization, and
(b) a powder composition comprising a first type of polymer particles and a second type of polymer particles, which are different from each other and each comprise an initiator for a free radical polymerization reaction,
wherein the first type of polymer particles are swellable or dissolvable in the liquid binder at room temperature and thereby release contained initiator for a first free radical polymerization of the polymerizable material, and
wherein the second type of polymer particles release additional initiator upon contact with the liquid binder at elevated temperatures above 40°C for a further radical polymerization of the polymerizable material.

2. The material system according to claim 1, wherein the material polymerizable by free radical polymerization comprises one or more than one type of mono-ethylenically unsaturated monomers, preferably selected from (meth)acrylate monomers, and optionally one or more than one crosslinker, preferably a compound with two or more ethylenically unsaturated moieties, such as (meth)acrylate and/or allyl moieties, per molecule; and/or wherein the material polymerizable by free radical polymerization comprises one or more than one hydroxyalkyl(meth)acrylate monomer and one or more than one bi- or higher functional (meth)acrylate, for example from 50 to 99 wt.% hydroxyalkyl(meth)acrylate monomer(s), and from 1 to 5 wt.% bi- or higher functional (meth)acrylate(s), based on the total weight of the liquid binder; and/or
wherein material polymerizable by free radical polymerization comprises at least 50 wt.%, based on the total weight of the liquid binder, of one or more than one (meth)acrylate monomer(s) that individually yield(s) a homopolymer having a glass transition temperature below 0°C, such as below -40°C, such as hydroxybutyl acrylate; and/or
wherein the material polymerizable by free radical polymerization comprises one or more than one volatile ethylenically unsaturated monomer(s) having a vapor pressure in a range from 5 to 500 hPa, such as in a range from 10 to 100 hPa or from 10 to 30 hPa, at a temperature of 20°C, preferably selected from the group consisting of methyl acrylate, methyl methacrylate, ethyl acrylate, ethyl methacrylate, propyl acrylate, propyl methacrylate, n-butyl acrylate, i-butyl acrylate, styrene, ethyl vinyl ether, divinylether, n-propyl vinyl ether, n-butyl vinyl ether, i-butyl vinyl ether and mixtures or combinations thereof, wherein the material polymerizable by free radical polymerization preferably comprises the one or more than one volatile ethylenically unsaturated monomer(s) in an amount from 2 wt.% to 10 wt.%, such as from 3 wt.% to 7 wt.%, based on the total weight of the liquid binder; and/or
wherein the material polymerizable by free radical polymerization is a mixture of ethylenically unsaturated monomers that is copolymerizable to a copolymer having a glass transition temperature, as determined by dynamic mechanical analysis, of 30°C or less, such as 0°C or less or -20°C or less.

3. The material system according to any one of the preceding claims, wherein the liquid binder further comprises an oxygen scavenger, wherein the oxygen scavenger preferably comprises a trivalent phosphorous compound, wherein the trivalent phosphorous compound preferably comprises a phosphine, a phosphite or a combination or mixture thereof, wherein the phosphine preferably comprises a trialkylphosphine and/or a triarylphosphine and/or wherein the phosphite preferably comprises a trialkylphosphite and/or a triarylphosphite, the trivalent phosphorous compound more preferably comprising triphenylphosphine, triethyl phosphine, triphenylphosphite, triethylphosphite, or a mixture or combination thereof.

4. The material system according to claim 3, wherein the liquid binder comprises the oxygen scavenger such as the trivalent phosphorous compound in an amount from 0.001 to 10 wt.%, preferably from 0.01 to 1 wt.%, more preferably from 0.05 to 0.2 wt.%, based on the total weight of the liquid binder.

5. The material system according to any one of the preceding claims, wherein the liquid binder further comprises an accelerator such as an amine, preferably a tertiary amine, for example dimethyl-p-toluidine, dihydroxyethyl-p-toluidine or 4-dimethylamino phenethyl alcohol, wherein the liquid binder comprises the accelerator preferably in an amount from 0.001 to 5 wt.%, more preferably from 0.01 to 1 wt.%, based on the total weight of the liquid binder; and/or
wherein the liquid binder further comprises an organic solvent, such as an ester, wherein the liquid binder comprises the organic solvent preferably in an amount from 1 to 30 wt.%, more preferably from 5 to 15 wt.%, based on the total weight of the liquid binder; and/or wherein the liquid binder further comprises one or more than one additive selected from fillers, rheology modifying agents like viscosity modifiers, shrinkage minimizing agents, retardants, pH modifying agents, stabilizing agents, biocides, surfactants, humectants, wetting agents and colorants; and/or
wherein the liquid binder has a viscosity in a range from 1 to 50 mPas and/or a surface tension in a range from 20 to 50 mN/m.

6. The material system according to any one of the preceding claims, wherein the second type of polymer particles has a higher glass transition temperature than the first type of polymer particles, wherein preferably the second type of polymer particles have a higher glass transition temperature that is at least 20°C, preferably at least 30°C or at least 40°C, higher than the glass transition temperature of the first type of polymer particles; and/or wherein the second type of polymer particles have a glass transition temperature, as determined by differential scanning calorimetry, of 90°C or more, such as in a range from 90°C to 130°C; and/or
wherein the second type of polymer particles comprise polymethyl methacrylate, preferably comprising at least 60 wt.% of structural units derived from methyl methacrylate.

7. The material system according to any one of the preceding claims, wherein the first type of polymer particles has a glass transition temperature, as determined by differential scanning calorimetry, of 70°C or less, such as in a range from 40°C to 70°C; and/or
wherein the first type of polymer particles comprise a copolymer obtained by copolymerizing a monomer mixture comprising a plurality of different (meth)acrylate monomers, the copolymer preferably comprising at least 60 wt.% of structural units derived from methyl methacrylate.

8. The material system according to any one of the preceding claims, wherein the first type of acrylic polymer particles and the second type of acrylic polymer particles each comprise the initiator in an amount from 0.1 to 10 wt.%, based on the total weight of the first type of polymer particles or the weight second type of polymer particles, respectively, wherein the initiator can be incorporated into the first and/or second type of polymer particles, and/or be present at a surface of the first and/or second type of polymer particles.

9. The material system according to any one of the preceding claims, wherein the initiator comprises an organic peroxide, preferably an aromatic peroxide, such as dibenzoyl peroxide.

10. The material system according to any one of the preceding claims, wherein the powder composition further comprises at least one additional type of polymer particles.

11. The material system according to claim 10, wherein the at least one additional type of polymer particles comprises acrylic polymer particles, preferably comprising at least 60 wt.% of structural units derived from methyl methacrylate and/or having a glass transition temperature, as determined by differential scanning calorimetry, of less than 110°C, such as in a range from 80°C to 100°C; and/or
wherein the additional type of polymer particles does not comprise an initiator for a free radical polymerization reaction.

12. The material system according to claim 10 or 11 comprising the at least one additional type of polymer particles in an amount from 60 to 95 wt.%, based on the total weight of the powder composition.

13. The material system according to any one of the preceding claims, wherein the powder composition comprises from 1 to 15 wt.% of the first type of polymer particles and/or comprises from 1 to 25 wt.% of the second type of polymer particles, based on the total weight of the powder composition, wherein the powder composition preferably contains the first type of polymer particles and the second type of polymer particles in amounts corresponding to a weight ratio in a range from 1:20 to 5:1, preferably from 1:15 to 1:1 or from 1:10 to 1:2.

14. The material system according to any one of the preceding claims, wherein the polymer particles, such as the first type of polymer particles, the second type of polymer particles and/or the additional type(s) of polymer particles, if present, are made by suspension polymerization and/or have a sphericity in a range from 0.9 to 1.0 and/or have a median particle size Dv50 in a range from 10 to 100 µm, preferably from 30 to 70 µm, and/or have a particle size distribution with a span (Dv90-Dv10)/Dv50 in a range from 0,7 to 1,3, as determined by dynamic light scattering.

15. The material system according to any one of the preceding claims, wherein the powder composition further comprises one or more than one flow agent, preferably in an amount of 0.01 to 0.5 wt.%, based on the total weight of the powder composition; and/or
wherein the powder composition has a bulk density in a range from 600 to 750 g/L, such as from 650 to 720 g/L; and/or
wherein the powder composition and the liquid binder are provided as separate components, wherein the liquid binder is printable onto a layer of the powder composition; and/or
wherein the liquid binder is used in an amount in a range from 15 to 45, preferably 20 to 35 wt.%, based on the weight of the powder composition to be solidified plus the liquid binder.

16. Use of a material system according to any one of claims 1 to 15 for three-dimensional printing.

17. A three-dimensional article prepared by three-dimensional printing using a material system according to any one of claims 1 to 15,
wherein the three-dimensional printing preferably comprises the steps of:
(a) providing a layer of the powder composition of the material system according to any one of claims 1 to 15 on a building platform of a 3D printer,
(b) selectively applying by a printhead of the 3D printer a liquid binder of the material system according to any one of claims 1 to 32 to one or more areas of the layer, which are to be solidified,
(c) repeating steps (a) and (b) layer-by-layer until a three-dimensional article of the desired shape has been formed,
(d) keeping the formed three-dimensional article at room temperature for partial curing to obtain a green body of the article, and
(e) further curing the green body at a temperature above 40°C to obtain the final cured three-dimensional article.

18. The three-dimensional article according to claim 17 comprising 20 wt.% or more, preferably 25 wt.% or more, of the liquid binder, based on the total weight of the article; and/or exhibiting a green body strength between 0.3 and 1 mm after 30 hours or less at room temperature; and/or
exhibiting a deflection Δz of less than 8 mm, such as less than 5 mm, in an oven stability test as described herein with a protrusion of 4 cm; and/or
wherein the final cured article has a tensile strength at break of 25 MPa or more and/or a tensile elongation at break of 2.5% or more; and/or
having a porosity of less than 15 vol.%.
